# EUROPÄISCHE PATENTSCHRIFT

(11) **EP 3 018 435 B1**
(45) Veröffentlichungstag und Bekanntmachung des Hinweises auf die Patenterteilung: **03.01.2018**
(21) Anmeldenummer: 15193225.8
(22) Anmeldetag: 05.11.2015
(51) Int. Cl.: F25B 45/00, B60H 1/00

(54) **VORRICHTUNG UND VERFAHREN ZUM WARTEN EINER KLIMAANLAGE**
DEVICE AND METHOD FOR MAINTENANCE OF AN AIR CONDITIONER
DISPOSITIF ET PROCEDE D'ENTRETIEN D'UNE CLIMATISATION

(30) Priorität: 10.11.2014 AT 508192014
(43) Veröffentlichungstag der Anmeldung: 11.05.2016
(73) Patentinhaber: AVL DiTest GmbH, 8020 Graz (AT)
(72) Erfinder: Kerschenbauer, Peter, 8250 Vorau (AT); Muchitsch, Dietmar, 8020 Graz (AT)
(74) Vertreter: Patentanwälte Pinter & Weiss OG

(56) Entgegenhaltungen:
- DE-A1-102007 006 876
- DE-A1-102009 031 293

## Beschreibung

Die Erfindung betrifft eine Vorrichtung zum Warten einer Klimaanlage, insbesondere für Klimaanlagen, die als Kältemittel CO₂ bzw. R744 nutzen, wobei die Vorrichtung zumindest eine erste Kupplung zum Anschließen der Vorrichtung an einen ersten Serviceanschluss der Klimaanlage, einen Vorratsbehälter für das Kältemittel, einen Kompressor und eine Vielzahl an Sperrventilen zur selektiven Freigabe unterschiedlicher Fluidverbindungen aufweist. Weiters betrifft die Erfindung ein Verfahren zum Warten einer Klimaanlage mittels einer erfindungsgemäßen Vorrichtung.

Unabhängig vom verwendeten Kältemittel hat ein Klimaanlagenservice die Aufgabe, die Klimaanlage zu entleeren, zu evakuieren und danach mit der richtigen Kältemittelmenge und Ölmenge wieder zu befüllen. Moderne Servicegeräte, wie sie etwa für KFZ-Klimaanlagen verwendet werden, weisen üblicher Weise zwei Serviceanschlüsse auf, wobei der eine an die Hochdruckseite der Klimaanlage angeschlossen wird, und der andere an die Niederdruckseite. Dadurch wird ein Kreislauf gebildet, der üblicher Weise vom niederdruckseitigen Anschluss über einen Ölabscheider, einen Verdampfer, einen Kompressor und einen Verflüssiger zum hochdruckseitigen Anschluss führt. Im Servicegerät sind weiters Entleer- und Befülleinrichtungen zum Absaugen des Gemischs aus Kältemittel und Kompressoröl aus dem Kältemittelkreislauf und zu Wiederauffüllen der Klimaanlage mit Kältemittel und Kompressoröl vorgesehen. Dabei wird in einer ersten Phase das Kreislaufgemisch über eine Trennstufe, z. B. einen Ölabscheider oder einen Filter, abgesaugt. Danach wird das Kreislaufsystem mittels einer Vakuumpumpe weitgehend restentleert und dann dem System aus einem Vorratsbehältnis neues Kältemittel und Frischöl zugeführt.

Systeme und Verfahren zur Wartung von Klimaanlagen sind beispielsweise aus WO 25 2011/088831 A1, DE 202008003123 U1, oder DE 102009054436 A1 bekannt. Dokument DE 10 2009 031 293 A1 offenbart eine Vorrichtung zum Befüllen von Klimaanlagen gemäß Oberbegriff des Anspruchs 1, bei der eine Förderpumpe für Fluid zum Druckaufbau in einem Druckbehälter dient. Bei der Verwendung von CO₂ bzw. R744 als Kältemittel liegt ein Problem darin, dass das Kältemittel unterhalb einer Druckschwelle erstarren kann. Die Schwelle, bei der das CO₂ im Zweiphasenbereich zu Trockeneis erstarrt, liegt bei einem Druck von 5,18 Bar. Diese Grenze zwischen dem Zweiphasenbereich und dem Trockeneisbereich wird auch als Sublimationsdruck bezeichnet.

Ein weiteres Problem des Standes der Technik ist die exakte Bemessung der Füllmenge beim Wiederauffüllen (oder erstmaligen Auffüllen) des Kühlmittelkreislaufs der Klimaanlage. Üblicher Weise wird dazu eine Wägezelle verwendet, die die Menge des im Vorratsspeicher vorhandenen Kältemittels misst. Aufgrund des verhältnismäßig hohen Gewichtsunterschiedes zwischen dem vollständig gefüllte und dem vollständig entleerten Vorratsspeicher sind dazu Wägezellen mit einem großen Messbereich erforderlich. Ein großer Messbereich führt jedoch zu Einbußen hinsichtlich der Genauigkeit der Messung, wobei die Genauigkeit durch die Verwendung von sehr aufwändigen, sensiblen und daher teuren Waagen erhöht werden kann.

Der Erfindung liegt die Aufgabe zugrunde, diese und andere Probleme des Standes der Technik zu lösen und insbesondere einfache und kostengünstige Vorrichtungen und Verfahren bereitzustellen, die einerseits eine einfache Handhabung bei der Durchführung eines Klimaservices bieten, mit denen während der Wartung die Bildung von Trockeneis im Kältemittelkreislauf der gewarteten Klimaanlage vermieden werden kann, und die eine zuverlässige, einfache und störungsunempfindliche Bemessung der nachgefüllten Menge an Kältemittel ermöglichen.

Erfindungsgemäß werden diese Ziele durch eine Vorrichtung der eingangs genannten Art erreicht, die einen Membranspeicher mit einer Druckseite und einer von der Druckseite durch die Membran des Membranspeichers getrennte Speicherseite aufweist, wobei durch Schaltkombinationen der Sperrventile eine Auffüll-Fluidverbindung für flüssiges Kältemittel von einer Quelle flüssigen Kältemittels zur Speicherseite des Membranspeichers, eine Druckaufbau-Fluidverbindung von einer Quelle gasförmigen Kältemittels über den Kompressor zur Druckseite des Membranspeichers, und eine Einfüll-Fluidverbindung von der Speicherseite des Membranspeichers zur ersten Kupplung selektiv freigebbar sind.

In vorteilhafter Weise kann eine Wägezelle zur Ermittlung der im Membranspeicher befindlichen Kältemittelmenge vorgesehen sein. Diese Wägezelle kann einen Messbereich aufweisen, der lediglich den Gewichtsbereich zwischen einem leeren Membranspeicher und dem mit der Menge des üblicherweise in eine Klimaanlage einzufüllenden Kältemittels gefüllten Membranspeichers umfasst. Dieser Messbereich ist erheblich geringer als der Messbereich, der für die Messung des verhältnismäßig großen und schweren Vorratsspeichers üblicher Weise erforderlich ist. Es können daher kostengünstigere und genauere Waagen verwendet werden.

In einer vorteilhaften Ausführungsform kann durch Schaltkombinationen der Sperrventile weiters eine Konditionier-Fluidverbindung von der Druckseite des Membranspeichers zur ersten Kupplung freigebbar sein. Unmittelbar nachdem der Druck im Membranspeicher mit dem Kompressor erhöht wurde, indem gasförmiges Kältemittel in die Druckseite des Membranspeichers gepumpt wurde, kann dieses üblicher Weise einen Druck in der Größenordnung von zwischen etwa 80 bar und etwa 120 bar, beispielsweise etwa 100 bar, und eine Temperatur in der Größenordnung zwischen etwa 80 °C und etwa 120 °C, beispielsweise etwa 100 °C aufweisen. Indem man nun die Konditionier-Fluidverbindung öffnet und eine geringe Menge (beispielsweise etwa 50 g) des verhältnismäßig heißen und gasförmigen Kältemittels von der Druckseite des Membranspeichers in den Kühlkreislauf der Klimaanlage einströmen lässt, kann die Bildung von Trockeneis durch diese Konditionierung verhindert und möglicherweise vorhandenes Trockeneis vor dem eigentlichen Befüllen der Klimaanlage abgebaut werden.

In vorteilhafter Weise kann eine zweite Kupplung zum Anschließen der Vorrichtung an einen zweiten Serviceanschluss der Klimaanlage vorgesehen sein, wobei durch Schaltkombinationen der Sperrventile eine Ablass-Fluidverbindung von der zweiten Kupplung, gegebenenfalls über eine Vakuumpumpe, zu einem Auslass freigebbar ist. Durch vorsehen des zweiten Anschlusses lässt sich ein vollständiges Klimaservice mit einem einzigen Gerät schnell und vorteilhaft durchführen, wobei die Klimaanlage mit dem selben Gerät vollständig entleert und wieder mit frischem oder aufbereiteten Kühlmittel wieder befüllt werden kann.

In einer weiteren vorteilhaften Ausgestaltung kann durch Schaltkombinationen der Sperrventile eine Kreislauf-Fluidverbindung von der zweiten Kupplung, über einen Verdampfer, den Kompressor, und das Drosselorgan zu der ersten Kupplung freigebbar sein. Diese Kreislauf-Fluidverbindung erlaubt es, als Zwischenschritt während des Entleerens der Klimaanlage, in einem Kreislaufprozess das im System befindliche Kühlmittel sehr schnell so zu konditionieren, dass beim nachfolgenden vollständigen Ablassen und Evakuieren das Risiko für eine Bildung von Trockeneis verhindert wird.

In vorteilhafter Weise kann die Quelle für flüssiges Kältemittel ein Steigrohr des zumindest einen Vorratsbehälters und die Quelle für das gasförmige Kältemittel der Kopfanschluss des zumindest einen Vorratsbehälters sein. Die erfindungsgemäße Vorrichtung lässt sich dadurch mit einem einzigen Vorratsbehälter realisieren.

Die Erfindung betrifft weiters ein vorteilhaftes Verfahren zum Warten einer Klimaanlage mittels einer oben beschriebenen Vorrichtung, wobei das Verfahren beim Auffüllen der zuvor evakuierten Klimaanlage mit Kältemittel, vorzugsweise CO2 bzw. R744,die folgenden Schritte aufweist: Schaffen eines Ausgangsdrucks im Membranspeicher, wobei der Ausgangsdruck über dem Sublimationsdruck des Kältemittels liegt; Einströmen lassen von flüssigem Kältemittel aus dem Vorratsbehälter in die Speicherseite des Membranspeichers; Erhöhen des Drucks im Membranspeicher durch Einbringen von gasförmigem Kältemittel in die Druckseite des Membranspeichers; und Einströmen lassen von flüssigem Kältemittel aus der Speicherseite des Membranspeichers in die Klimaanlage.

In einer bevorzugten Ausführungsform kann das gasförmige Kältemittel von dem Kompressor aus dem Vorratsbehälter zur Druckseite des Membranspeichers gepumpt werden. Neben dem ohnehin in der Wartungsvorrichtung üblicher Weise vorgesehenen Kompressor müssen keine zusätzlichen Druckaufbaumittel vorgesehen werden.

Vor dem Schritt des einströmen Lassens von flüssigem Kältemittel in die Klimaanlage kann in einer vorteilhaften Ausführungsform gasförmiges Kältemittel aus der Druckseite des Membranspeichers in die Klimaanlage einströmen gelassen werden. Dies vermeidet Trockeneis im Kreislauf der Klimaanlage.

In vorteilhafter Weise kann beim Schritt des einströmen Lassens von flüssigem Kältemittel aus dem Vorratsbehälter in die Speicherseite des Membranspeichers die Menge des im Membranspeicher vorhandenen flüssigen Druckmittels mit einer Wägezelle ermittelt werden. Dies erlaubt es, eine für die jeweilige Klimaanlage vorab definierte Menge an neu einzufüllendem Kältemittel bereitzustellen.

Weiters kann in vorteilhafter Weise beim Schritt des einströmen Lassens von flüssigem Kältemittel in die Klimaanlage die Menge des eingeströmten Kältemittels über die Wägezelle überwacht werden. Dadurch lässt sich die Einfüllmenge exakt dosieren.

Die gegenständliche Erfindung wird nachfolgend unter Bezugnahme auf die Figuren 1 bis 3 näher erläutert, die beispielhaft, schematisch und nicht einschränkend vorteilhafte Ausgestaltungen der Erfindung zeigen. Dabei zeigen
Fig. 1 einen Schaltplan einer beispielhaften erfindungsgemäßen Servicevorrichtung, wobei eine Auffüll-Fluidverbindung, eine Druckaufbau-Fluidverbindung, eine Einfüll-Fluidverbindung und eine Konditionier-Fluidverbindung eingezeichnet sind,
Fig. 2 einen Schaltplan der Servicevorrichtung gemäß Fig. 1, wobei eine Kreislauf-Fluidverbindung und eine Abpump-Fluidverbindung eingezeichnet sind, und
Fig. 3 einen Schaltplan der Servicevorrichtung gemäß Fig. 1, wobei mehrere Ablass-Fluidverbindungen eingezeichnet sind.

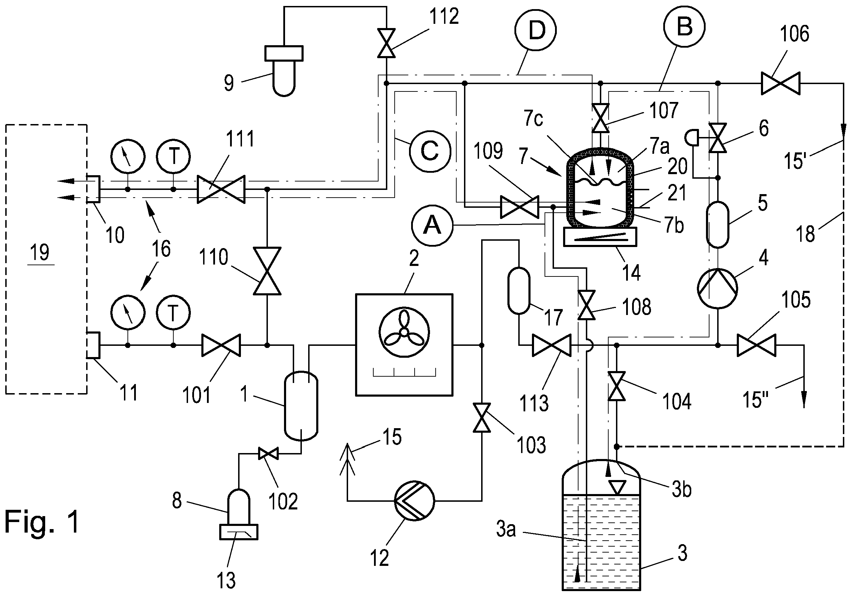

Fig. 1, 2 und 3 zeigen eine beispielhafte Ausführungsform der erfindungsgemäßen Vorrichtung, die für eine Wartung einer Klimaanlage verwendet werden kann, wobei jeweils die durch unterschiedliche Schaltkombinationen der Sperrventile bewirkten unterschiedlichen Fluidverbindungen veranschaulicht sind.

Die Vorrichtung weist eine erste und eine zweite Kupplung 10, 11, eine Anzahl von Sperrventilen 101-113, einen Ölabscheider 1, einen Verdampfer 2, einen Vorratsbehälter 3 mit einem Steigrohr 3a und einem Kopfanschluss 3b, einen Kompressor 4, einen Flüssigkeitsabscheider 5, ein Drosselorgan 6, einen Membranspeicher 7 mit einer Druckseite 7a und einer Speicherseite 7b, die von einer Membran 7c getrennt sind, wobei das Gewicht des Inhalts des Membranspeichers über eine Wägezelle 14 ermittelt werden kann, einen Altölbehälter 8, dessen Inhalt über eine Wägezelle 13 ermittelt werden kann, einen Frischölbehälter 9, eine Vakuumpumpe 12, mehrere jeweils durch Sperrventile 103, 105, 106 abschließbare Auslässe 15, 15', 15", mehrere im Bereich der Zuleitungen zu den Kupplungen 10, 11 angeordnete Messgeräte 16 zur Messung von Druck und Temperatur des Kältemittels und einen Filtertrockner 17 auf.

Um die Anlage für die nächste Wartung vorzubereiten wird in einem ersten Schritt der Membranspeicher mit zumindest der Menge an Kühlmittel befüllt, die voraussichtlich in die Klimaanlage nachgefüllt werden muss. Zum Vorbereiten des Membranspeichers wird darin zuerst ein Ausgangsdruck aufgebaut, der geringfügig über dem Vereisungsdruck von 5,18 bar liegt, zum Beispiel ein Ausgangsdruck von etwa 10 bar. Dazu werden die Sperrventile 104 und 107 geöffnet, während die Sperrventile 113, 105, 106, 109, 112, 111 und 110 geschlossen sind, wodurch eine Druckaufbau-Fluidverbindung B (Fig. 1) von dem Kopfanschluss 3b des Vorratsspeichers 3 über den Kompressor 4, den Flüssigkeitsabscheider 5, das Drosselorgan 6 bis zur Druckseite 7a des Membranspeichers 7 geschaffen wird. Der Ausgangsdruck kann über die Druckaufbau-Fluidverbindung B aufgebaut werden, indem eine entsprechende Menge Kältemittel vom Kompressor über das geöffnete Schließventil 107 in die Druckseite 7a des Membranspeichers 7 eingepumpt wird. Gegebenenfalls kann auch das Schließventil 109 geöffnet sein, sodass das Kältemittel gleichzeitig auch in die Speicherseite 7b des Membranspeichers eingepumpt wird. Gegebenenfalls kann auch eine eigene direkte Fluidverbindung (nicht dargestellt) zwischen dem Kopfanschluss 3b und der Druckseite 7a des Membranspeichers geschaffen werden, über die das Kältemittel dosiert in die Druckseite 7a einströmen kann, ohne dass für diesen Schritt ein Kompressor erforderlich ist.

Falls der Druck im Membranspeicher nach einem vorhergehenden Wartungsvorgang anfänglich höher ist, als 10 bar, kann er, falls dies erforderlich ist, auf einfache Weise durch dosiertes Öffnen der Sperrventile 107 und 106 auf den gewünschten Druck abgesenkt werden.

Wenn der Ausgangsdruck erreicht ist, wird das Schließventil 107 und gegebenenfalls das Schließventil 109 geschlossen und durch öffnen des Schließventils 108 wird über die dadurch geschaffene Auffüll-Fluidverbindung A über das Steigrohr 3a des Vorratsbehälters 3 flüssiges Kältemittel aus dem Vorratsbehälter 3 in die Speicherseite 7b des Membranspeichers einströmen gelassen. Wenn der Druck im Membranspeicher 7 dem Druck im Vorratsbehälter 3 entspricht (dieser liegt üblicher Weise bei ca. 57 bar), wird das Sperrventil 108 wieder geschlossen. Der Membranspeicher 7 ist vorzugsweise so bemessen, dass sich nach diesem Befüllvorgang eine Menge an Kältemittel in der Speicherseite 7b des Membranspeichers befindet, die der für die Wiederbefüllung der Klimaanlagen erforderlichen Menge entspricht, bzw. diese übersteigt. Die Dichte des flüssigen CO₂ beträgt etwa 700 g/lt. (bei 20° C, 57 bar). Somit würde eine Füllmenge von etwa 1 Liter flüssigem CO₂ für die vollständige Befüllung eine KFZ-Klimaanlage mit einer Füllmengen von ca. 500 g ausreichen. Der Befüllvorgang kann natürlich auch schon vorher, bei einer geringeren Menge an Kühlmittel in der Speicherseite 7b des Membranspeichers 7, beendet werden, wenn zum Beispiel der Membranspeicher eine erheblich größere Menge an Kühlmittel fassen würde, als für die aktuell zu befüllende Klimaanlage erforderlich ist.

Die Menge des im Membranspeicher 7 enthaltenen Kältemittels kann über die Wägezelle 14 gemessen werden, eine exakte Kenntnis des Inhalts ist jedoch nicht zwingend erforderlich. Wichtig ist, dass sich eine ausreichende Menge an Kältemittel zum Wiederbefüllen der Klimaanlage in der Speicherseite 7b des Membranspeichers 7 befindet, und dass in einem späteren (weiter unten beschriebenen) Schritt des Befüllens der Klimaanlage die Menge des aus dem Membranspeicher 7 ausfließenden Kältemittels (und damit die in die Klimaanlage eingefüllte Menge an Kühlmittel) mit der Wägezelle 14 überwacht und gemessen werden kann.

Nach dem Befüllen der Speicherseite 7b wird der Druck in dem Membranspeicher 7 erhöht. Dazu werden die Sperrventile wieder in die Konfiguration der Druckaufbau-Fluidverbindung B gebracht, und über den Kompressor 4 wird nun gasförmiges Kältemittel aus dem Vorratsspeicher 3 in die Druckseite 7a des Membranspeichers gepumpt.

Wenn der Druck im Membranspeicher ausreichend hoch ist, beispielsweise kann der Druck auf etwa 120 bar erhöht werden, wird der Kompressor 4 abgeschaltet und das Sperrventil 107 wird geschlossen. Dann verbleibt der Membranspeicher 7 bis zu seiner weiteren Verwendung in diesem vorbereiteten Zustand.

Der Schritt des Vorbereitens des Membranspeichers 7 muss nicht zwingend vor dem Beginn der Wartung durchgeführt werden, sondern er kann auch zu einem späteren Zeitpunkt, etwa nach dem Evakuieren der Klimaanlage 19 und vor dem Wiederbefüllen derselben durchgeführt werden. Vorzugsweise kann er auch zeitgleich mit andern Wartungsschritten durchgeführt werden, etwa gleichzeitig mit dem unten beschriebenen Schritt des Evakuieren des Ölabscheiders 1 oder während die Klimaanlage 19 über die Vakuumpumpe 12 evakuiert wird, wie dies ebenfalls weiter unten beschrieben ist.

Vor, nach oder während der Vorbereitung des Membranspeichers 7 wird zur Wartung einer Klimaanlage 19 die erste Kupplung 10 an den hochdruckseitigen Serviceanschluss (nicht dargestellt) der zu wartenden Klimaanlage 19 angeschlossen und die zweite Kupplung 11 wird an den niederdruckseiteigen Serviceanschluss der Klimaanlage 19 angeschlossen, wobei die beiden zwischen den Kupplungen und den anderen Elementen der Wartungsvorrichtung vorgesehenen Sperrventile 111 und 101 vorerst noch geschlossen bleiben. Nach dem Anschließen der Kupplungen 10, 11 an die Serviceanschlüsse der Klimaanlage 19 können der Druck und die Temperatur des in der Klimaanlage 19 befindlichen Kältemittels an den Messgeräten 16 abgelesen werden. Diese Messgeräte 16 erlauben auch während des Evakuierens und nachfolgenden Befüllens der Klimaanlage 19 eine Überwachung des Systemzustandes durch die Bedienperson.

Es ist zu beachten, dass die Betriebsdrücke der Klimaanlage 19 (die während des Betriebs üblicher Weise bei beispielsweise ca. 130 bar auf der Hochdruckseite und ca. 40 bar auf der Niederdruckseite liegen) beim Warten der Anlage keine Rolle spielen, da ja der Klimaanlagen-Kompressor (wie auch der Gaskühler und der Verdampfer der Klimaanlage 19) während des Service deaktiviert ist. Wenn im Zusammenhang mit dieser Anmeldung daher der Begriff "Hochdruckseite der Klimaanlage" verwendet wird, so ist damit lediglich der Leitungsabschnitt der Klimaanlage 19 gemeint, der zwischen dem Verdichter und der Drossel der Klimaanlage 19 liegt, und der über den Gaskühler und, im Fall von CO₂ als Kühlmittel, den inneren Wärmetauscher der Kühlanlage verläuft. Wie einem Fachmann klar ist, stellt sich bei stillstehendem Kompressor rasch im Wesentlichen derselbe Druck und Phasenzustand im gesamten Kreislauf der Klimaanlage 19 ein. Dieser Phasenzustand in Ruhelage kann beispielsweise bei etwa 20 °C, 250 kg/m³ und 57 Bar liegen. Es ist zu beachten, dass diese Werte rein beispielhaft zur Erläuterung der Erfindung angeführt sind. Wie dem Fachmann klar ist, können sie sich von den in der Praxis tatsächlich auftretenden Werten erheblich unterscheiden. Dies gilt auch für die weiteren im Zusammenhang mit der gegenständlichen Beschreibung dargelegten Zustandswerte.

Nach dem Anschließen des Servicegeräts an die Klimaanlage 19 (oder auch vorher) werden die Leitungen des Servicegerätes (bzw. Teile davon) evakuiert. Dazu werden die Sperrventile 110 und 113, sowie das zu einer Vakuumpumpe führende Sperrventil 103 geöffnet, während die anderen Sperrventile geschlossen werden/bleiben. Dann wird der dadurch abgegrenzte Bereich mit der Vakuumpumpe 12 evakuiert und danach das Sperrventil 103 geschlossen.

Um nicht das gesamte Volumen der Wartungsvorrichtung evakuieren zu müssen, können für diesen Schritt auch die Sperrventile 110 und 113 geschlossen werden, sodass im Wesentlichen nur der Bereich des Ölabscheiders 1 und des Verdampfers 2 evakuiert wird. Dies ist insbesondere dann vorteilhaft, wenn während des Evakuierens des Bereichs des Ölabscheiders zeitgleich auf der Membranspeicher 7 vorbereitet wird, wie dies oben beschrieben ist.

Nach dem Evakuieren des an die zweite Kupplung 11 bzw. das Sperrventil 101 anschließenden Bereichs wird das Sperrventil 101 zur Klimaanlage 19 geöffnet, was dazu führt, dass das Kältemittel der Klimaanlage 19 in den evakuierten Bereich, insbesondere in das verhältnismäßig große Volumen des Ölabscheiders 1 strömt. Durch das zusätzliche Volumen des Ölabscheiders 1 kommt es zu einer im Wesentlichen isenthalpen Expansion des Kältemittels, wobei das Volumen abhängig von der Größe des Ölabscheiders 1 und der Klimaanlage 19 in etwa verdoppelt wird. Eine isenthalpe Verdoppelung des Volumens könnte beispielsweise zu einer Temperatur von etwa -2 °C und einem Druck von etwa 33 bar führen.

Würde man von diesem Zustand ausgehend damit beginnen, das Kältemittel abzulassen, beispielsweise durch Öffnen des Sperrventils 113 und des zu einem Auslass 15" führenden Sperrventils 105, und dadurch das Kältemittel rasch entspannen, würde bei einem Druck von 5,18 bar (bei einer Temperatur von etwa -59 °C) das Kältemittel zu Trockeneis erstarren.

Es ist daher im Stand der Technik üblich, nach einer ersten Entspannung bis auf etwa 18 bar, so lange zu warten, bis das CO₂ im Kühlkreislauf vollständig verdampft ist. Danach kann der Ablass- bzw. Absaugvorgang, nun außerhalb des Zweiphasenbereichs, fortgesetzt werden.

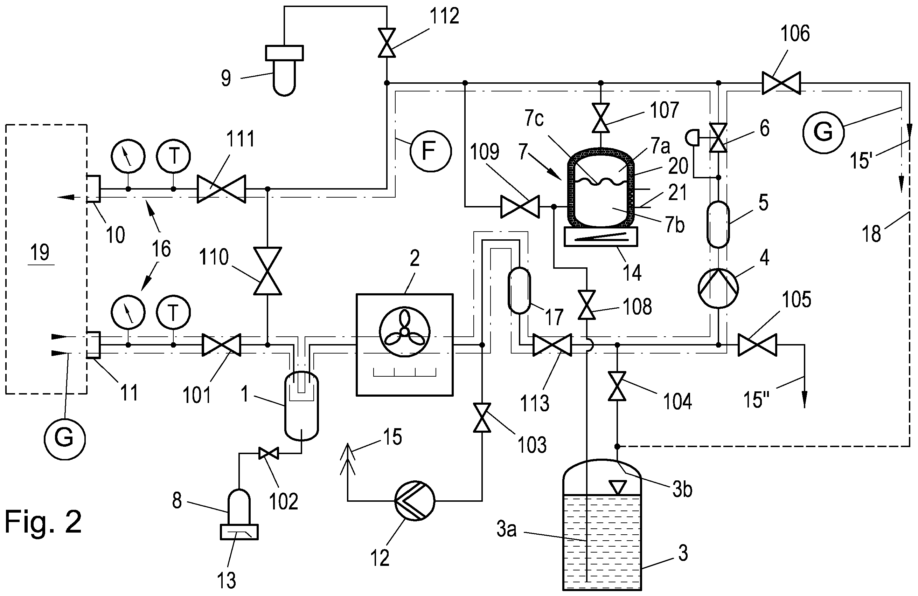

Um diese Wartezeit zu vermeiden und dadurch die für das Service erforderliche Gesamtdauer erheblich zu verringern, kann das Kühlmittel vor dem nächsten Schritt konditioniert werden. Dazu werden alle Sperrventile bis auf die zu den Kupplungen 10, 11 führenden Sperrventile 101 und 111 geschlossen und das Sperrventil 113 wird geöffnet. Dadurch ergibt sich eine Kreislauf-Fluidverbindung F (diese ist in Fig. 2 eingezeichnet), die aus der Klimaanlage 19 über die zweiten Kupplung 11, den Ölabscheider 1, den Verdampfer 2, den Filtertrockner 17, den Kompressor 4, den Flüssigkeitsabscheider 5, das Drosselorgan 6 und über die ersten Kupplung 10 wieder zurück in die Klimaanlage 19 führt. Nach dem Herstellen dieser Kreislauf-Fluidverbindung F wird das Kältemittel durch Betätigen des Kompressors 4 zirkulieren gelassen, wobei es von der zweiten Kupplung 11 (an der Niederdruckseite der Klimaanlage 19) bis zur ersten Kupplung 10 (an der Hochdruckseite der Klimaanlage 19) der Reihe nach die folgenden Phasen durchläuft:
- Im Ölabscheider 1 wird das vom Kältemittel aus den Leitungen der Klimaanlage 19 mitgeführte Altöl abgeschieden und in einem Altölbehälter 8 gesammelt. Die Menge des gesammelten Altöls (und damit des nachzufüllenden Frischöls) kann über eine Wägezelle 13 ermittelt werden.
- Im Verdampfer 2 wird das CO₂ isobar aus dem Zweiphasenbereich heraus erwärmt und durchläuft danach einen Filtertrockner 17, um eventuell noch vorhandene Verunreinigungen oder Feuchtigkeit zu entfernen.
- Vom Kompressor 4 wird das Kältemittel im Wesentlichen isentrop auf einen überkritischen Druck von etwa 90 bar verdichtet, wobei der Druck von dem Drosselorgan 6 geregelt wird. Die Temperatur des verdichteten Gases beträgt etwa 100 °C. Der Flüssigkeitsabscheider 5 dient dazu, mitgerissenes Öl des Kompressors 4 diesem wieder rückzuführen.
- Im Drosselorgan 6 kommt es zu einer isenthalpen Expansion, beispielsweise auf einen Druck von etwa 67 bar und eine Temperatur von etwa 80 °C, bevor das Kältemittel über die erste Kupplung 10 zurück in die Klimaanlage 19 strömt.
- In der Klimaanlage 19 kommt es dann zu einer Vermischung mit dem Kältemittel, das sich in den Leitungen und im Akkumulator der Klimaanlage 19 befindet. Durch das Mischen ändert sich der Phasenzustand in der Klimaanlage 19 bei gleichbleibender Dichte.
- Über die zweite Kupplung 11 gelangt das Kältemittel dann wieder in den Ölabscheider 1, wodurch der Kreislauf geschlossen ist.

Dieser Kreislaufprozess wird so lange durchgeführt, bis in der Klimaanlage 19 ein Phasenzustand mit einer Enthalpie erreicht ist, deren Isenthalpe vorzugsweise vollständig außerhalb des Trockeneisbereichs liegt. Die genaue Lage des Endpunkts hängt stark vom ursprünglichen Füllgrad der Anlage ab und liegt vorzugsweise bei einer spezifischen Enthalpie von etwa 450 kJ/kg oder darüber. Ausgehend von diesem Zustand kann das CO₂ abgelassen und abgepumpt werden, ohne dass das Kühlmittel vereisen würde.

Über die Messgeräte 16 kann während des Kreislaufprozesses ein Wertepaar für den Druck und die Temperatur im Kreislauf abgelesen werden, aus dem ermittelt werden kann, ob beim vorgegebenen Füllgrad bereits eine ausreichende Enthalpie für das Ablassen erreicht ist.

In der Praxis kann es vorkommen, dass der Füllgrad der zu wartenden Anlage nicht bekannt ist. Bei dem Versuch, die Dauer des Kreislaufprozesses zu verkürzen und Energie einzusparen, kann es daher vorkommen, dass der Kreislaufprozess zu kurz durchgeführt wird, und dass die Leitungen der Klimaanlage 19 nach dem Evakuieren immer noch Reste von Trockeneis enthalten. Erfindungsgemäß können diese Vereisungsreste jedoch vor dem Wiederbefüllen aufgelöst werden, wie dies später beschreiben wird.

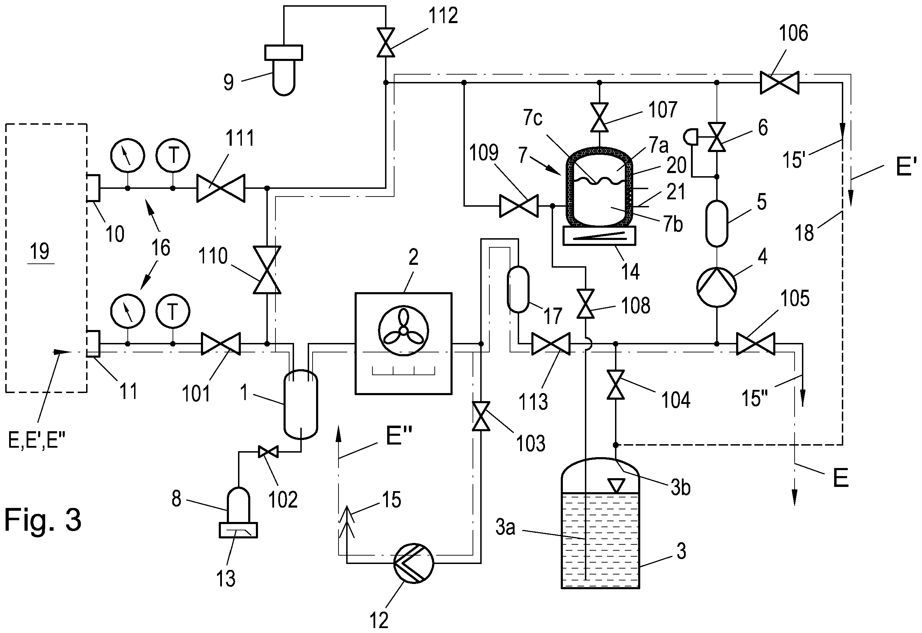

Nach dem Kreislaufprozess kann das Kältemittel aus der Klimaanlage 19 abgelassen werden, beispielsweise über den Auslass 15" durch Öffnen der Sperrventile 101, 113 und 105. Dieser Schaltkombination der Sperrventile schafft eine Ablass-Fluidverbindung E, wie sie in Fig. 3 eingezeichnet ist.

Gegebenenfalls kann das Kältemittel auch durch Öffnen der Sperrventile 101, 110 und 106 über die dadurch freigegebene Ablass-Fluidverbindung E' und über den Auslass 15' abgegeben werden.

Alternativ kann das Kältemittel in der Klimaanlage 19 auch einer Wiederverwertung zugeführt werden, wobei dazu eine Abpump-Fluidverbindung G (Fig. 2) geschaffen werden kann, die ausgehend von der zweiten Kupplung 11 über den Ölabscheider 1, den Verdampfer 2, den Filtertrockner 17, den Kompressor 4, den Flüssigkeitsabscheider 5, das Drosselorgan und das Sperrventil 106 zum Auslass 15' führt. Dieser Auslass kann dabei an einen Vorratsspeicher für wiederaufbereitetes Kühlmittel angeschlossen sein. Gegebenenfalls kann der Auslass 15' auch zu dem Kopfanschluss 3b des Vorratsbehälter 3 geführt sein, wie dies in den Figuren durch eine als Strichlinie eingezeichnete Wiederaufbereitungsleitung 18 angedeutet ist. Das Kältemittel kann gegebenenfalls nach dem Auslass 15' zum Verflüssigen über einen Gaskühler (nicht dargestellt) geführt werden. Gegebenenfalls kann in der Wiederaufbereitungsleitung 18 auch eine Durchflussmessung (nicht dargestellt) zur Messung der Menge des wiederaufbereiteten Kältemittels vorgesehen sein. Über das Drosselorgan 6 wird dabei der Druck des abgepumpten Kältemittels auf einen für das Befüllen des Vorratsbehälters 3 zulässigen Wert, beispielsweise auf zumindest 65 bis 70 bar, eingestellt.

Über die Abpump-Fluidverbindung G kann nun der Kompressor 4 das Kältemittel über die zweite Kupplung 11 aus dem Kreislauf der Klimaanlage 19 und gegebenenfalls zur Wiederverwendung in einen Vorratsbehälter pumpen.

Nach dem Abpumpen bzw. Ablassen des Kältemittels ist der Druck in den Leitungen der Klimaanlage 19 und der Wartungsvorrichtung auf Umgebungsdruck abgesunken. Es werden dann alle Sperrventile geschlossen, bis auf die Sperrventile 101, 103, 110 und 113, und die Leitungen der Klimaanlage 19 und der Wartungsvorrichtung werden von der Vakuumpumpe 12 evakuiert, wobei mit der Vakuumpumpe 12 ein Druck in der Größenordnung von etwa 1 mbar erzielbar ist. Bei diesem Druck verdampft auch eventuell in der Anlage vorhandenes Wasser und wird über die Vakuumpumpe 10 zusammen mit dem verbliebenen Kältemittel abgesaugt.

Nachdem nun das System vollständig evakuiert ist, wird die im Altölsammelbehälter 14 gesammelte Menge an Kompressoröl über die Wägezelle 13 gemessen und eine entsprechende Menge an Frischöl wird durch dosiertes Öffnen des Frischölventils 112 aus dem Frischölbehälter 9 in den evakuierten Bereich eingebracht. Vorzugsweise werden zuvor die Sperrventile 110 und 113 geschlossen, damit das Frischöl im gewünschten Leitungsbereich bleibt. Auch der Frischölbehälter 9 kann zum Zweck der Dosierung mit einer eigenen Wägevorrichtung (nicht dargestellt) versehen sein. Das im System vorherrschende Vakuum bewirkt, dass das Öl ohne weiteres Zutun ins System eingesaugt wird. Im nachfolgenden Einpumpschritt wird das Öl dann beim anschließenden Wiederbefüllen der Klimaanlage 19 vom einströmenden Kältemittel in den Kreislauf der Klimaanlage 19 gespült.

Vor dem Wiederbefüllen kann das Sperrventil 107 kurz geöffnet und dann wieder geschlossen werden, um eine geringe Menge, beispielsweise etwa 50 g, des in der Druckseite 7a des Membranspeichers 7 befindlichen gasförmigen Kältemittels über die dadurch geschaffene Konditionier-Fluidverbindung D (Fig. 1) in das Leitungssystem der Klimaanlage 19 einströmen zu lassen (die Sperrventile 101, 110 und 113 können zuvor geschlossen werden). Das Kältemittel in der Druckseite 7a weist nach dem oben beschriebenen vorbereitenden Schritt der Druckerhöhung im Membranspeicher einen hohen Druck (beispielsweise etwa 120 bar) und eine hohe Temperatur (beispielsweise etwa 100 °C) auf. Indem das heiße Gas in die Klimaanlage 19 strömt, wird Trockeneis, das gegebenenfalls noch irgendwo im Leitungssystem verblieben ist, gelöst und der Druck im System wird über den Sublimationsdruck von 5,8 bar gesteigert. Auch nachdem es im Membranspeicher 7 zwischen der Druckseite 7a und der Speicherseite 7b zu einem Temperaturausgleich gekommen ist, beträgt die Temperatur im Membranspeicher etwa 40 °C (ohne etwaige Temperaturübergänge über die Isolierung 20 oder eine Beheizung über eine gegebenenfalls vorgesehene Heizvorrichtung 21 zu berücksichtigen), was für die gewünschte Konditionierung ausreicht.

Dann wird das Sperrventil 109 geöffnet, und das flüssige Kältemittel, das unter Druck in der Speicherseite 7b des Membranspeichers 7 aufbewahrt wurde, strömt über die dadurch geschaffene Einfüll-Fluidverbindung C (Fig. 1) über die erste Kupplung 10 in die Klimaanlage 19. Die Menge des nachgefüllten Kältemittels kann über die Wägezelle 14 auf einfache Weise äußerst genau kontrolliert werden.

Wenn die erforderliche Füllmenge erreicht ist, wird das Schließventil 111 geschlossen und die Kupplungen 10 und 11 können von der Klimaanlage 19, die nun fertig gewartet ist, getrennt werden.

Um die Anlage für das nächste Klimaservice vorzubereiten wird lediglich der Druck im Membranspeicher durch dosiertes Öffnen des Sperrventils 107 auf den Ausgangsdruck von etwa 10 bar verringert. Danach kann die Speicherseite 7b des Membranspeichers durch Öffnen der Auffüll-Fluidverbindung A wieder mit Kältemittel gefüllt werden. Gegebenenfalls können eine oder beide Seiten des Membranspeichers auch vollständig entleert und gegebenenfalls evakuiert werden, zum Beispiel bei geöffneten Sperrventilen 107 und/oder 109, 110 und 103 über die Vakuumpumpe 12.

Da das Vorbereiten des Membranspeichers ausgeführt werden kann, während anfänglich die Vakuumpumpe 12 den Bereich evakuiert, in dem sich der Ölabscheider befindet, kann der gesamte Wartungsvorgang erheblich schneller durchgeführt werden als mit im Stand der Technik bekannten Vorrichtungen und Verfahren. Sowohl das Vorbereiten des Membranspeichers 7, als auch das Evakuieren des Ölabscheiders 1 können bereits durchgeführt werden, bevor die Vorrichtung an die Klimaanlage 19 angeschlossen wird. Dies verkürzt die Zeit, in der das Wartungsgerät an die Klimaanlage 19 angeschlossen sein muss.

Gegebenenfalls kann der Schritt des unter Druck Setzens des Membranspeichers 7 über die Druckaufbau-Fluidverbindung B erst unmittelbar vor dem Wartungsvorgang erfolgen, damit die hohe Temperatur auf der Druckseite 7a des Membranspeichers 7 nur geringfügig abkühlen kann, bevor sie vor dem Schritt des Wiedereinfüllens für die Trockeneisentfernung verwendet wird. Zusätzlich kann der Membranspeicher 7 mit einer Isolierung 20 versehen sein. Gegebenenfalls kann auch die Membran 7c des Membranspeichers wärmeisolierend ausgeführt sein.

Die Heizvorrichtung 21 verhindert das Auftreten von zu tiefen Temperaturen, beispielsweise von unter -20 °C, für die beispielsweise Membrane aus Flourelasomeren, wie etwa FPM, Viton, nicht geeignet sind. Flourelastomere weisen jedoch sehr gute Eigenschaften hinsichtlich der explosiven Dekompression auf.

In dem nachfolgend beschriebenen praktischen Beispiel wird ein Membranspeicher 7 mit einem Volumen von 3 Litern beschrieben. Nach dem Schritt der Druckerhöhung auf etwa 10 bar in beiden Kammern wird ca. 1,5 l flüssiges CO₂ bei. 20° C und 57 bar in die Speicherseite 7b einströmen gelassen, wobei dies einer Menge von etwa 1 kg CO₂ entspricht. Im Membranspeicher 7 dehnt sich das CO₂ aus, wobei das Volumen in der Speicherseite 7b auf etwa 2,7 l ansteigt. Etwa 0,75 It. davon sind flüssig und 1,95 It. gasförmig. Beim nachfolgenden Einpumpen von CO₂ in die Druckseite 7a des Membranspeichers 7 verflüssigt das CO₂ in der Speicherseite 7b wider und der Druck wird dann weiter auf 120 bar überkritisch erhöht, wobei sich der Druckseite 7a eine Temperatur von etwa 100 °C auf einstellt. Auf der Druckseite des Membranspeichers 7 befinden sich dabei nur etwa 250 - 300 g CO₂. Da das CO₂ auf beiden Seiten sehr ähnliche Wärmekapazitäten aufweist, stellt sich nach einem Temperaturausgleich auf beiden Seiten eine Temperatur von etwa 40 °C bei 120 bar ein. Wird von diesem Zustand ausgehend das CO₂, das sich in der Speicherseite 7b befindet, in die Klimaanlage ausgeschoben, sinkt der Druck bei einer vollständigen Entleerung der Speicherseite 7b auf etwa 60 bar, sodass es möglich ist, die gesamte Menge an CO₂ aus der Speicherseite 7b des Membranspeichers 7 an die Klimaanlage 19 abzugeben.

In Abwandlung zu dem in den Figuren dargestellten besonderen Ausführungsbeispiel, das rein der Erläuterung der Erfindung dient, kann die erfindungsgemäße Vorrichtung auch auf zahlreiche andere Weisen ausgeführt sein. Insbesondere kann die Anordnung von Elementen verändert werden und bestimmte Elemente können auch gänzlich entfernt werden, sofern dies die Funktionalität der Vorrichtung und die Durchführung des erfindungsgemäßen Verfahrens nicht beeinträchtigt.

Beispielsweise könnten zusätzliche Sperrventile und/oder Auslässe vorgesehen sein, um Bereiche des Leitungssystems von anderen Bereichen selektiv abzutrennen, wenn dies erforderlich ist. Erfindungsgemäß können von Fachleuten ohne erfinderisches Zutun zahlreiche geänderte Ausführungsformen geschaffen werden, ohne vom Schutzbereich der beigefügten Ansprüche abzuweichen.

### Bezugszeichenliste:

Ölabscheider (1)
Verdampfer 2
Vorratsbehälter (3)
Steigrohr (3a)
Kopfanschluss (3b)
Kompressor (4)
Flüssigkeitsabscheider 5
Drosselorgan (6)
Membranspeicher (7)
Druckseite (7a)
Speicherseite (7b)
Membran (7c)
Altölbehälter 8
Frischölbehälter 9
erste Kupplung (10)
zweite Kupplung (11)
Vakuumpumpe (12)
Wägezelle 13 für Altöl
Wägezelle (14) für Membranspeicher
Auslass (15, 15', 15")
Messgeräte 16
Filtertrockner 17
Wiederaufbereitungsleitung 18
Klimaanlage 19
Isolierung 20
Heizvorrichtung 21
Sperrventile (101-113)
Auffüll-Fluidverbindung (A)
Druckaufbau-Fluidverbindung (B)
Einfüll-Fluidverbindung (C)
Konditionier-Fluidverbindung (D)
Ablass-Fluidverbindung (E, E', E")
Kreislauf-Fluidverbindung (F)
Abpump-Fluidverbindung (G)

## Patentansprüche

1. Vorrichtung zum Warten einer Klimaanlage, insbesondere für Klimaanlagen, die als Kältemittel CO₂ bzw. R744 nutzen, wobei die Vorrichtung zumindest eine erste Kupplung (10) zum Anschließen der Vorrichtung an einen ersten Serviceanschluss der Klimaanlage, zumindest einen Vorratsbehälter (3) für das Kältemittel und eine Vielzahl an Sperrventilen (101-113) zur selektiven Freigabe unterschiedlicher Fluidverbindungen aufweist, und wobei die Vorrichtung einen Membranspeicher (7) mit einer Druckseite (7a) und einer von der Druckseite (7a) durch die Membran (7c) des Membranspeichers (7) getrennte Speicherseite (7b) aufweist, wobei durch Schaltkombinationen der Sperrventile (101-113) eine Auffüll-Fluidverbindung (A) für flüssiges Kältemittel von einer Quelle flüssigem Kältemittels zur Speicherseite (7b) des Membranspeichers (7), und eine Einfüll-Fluidverbindung (C) von der Speicherseite (7b) des Membranspeichers (7) zur ersten Kupplung (10) selektiv freigebbar sind, **dadurch gekennzeichnet dass**
die Vorrichtung einen Kompressor (4) aufweist und eine Druckaufbau-Fluidverbindung (B) von einer Quelle gasförmigen Kältemittels über den Kompressor (4) zur Druckseite (7a) des Membranspeichers (7) selektiv freigebbar ist.

2. Vorrichtung nach Anspruch 1, **dadurch gekennzeichnet, dass** eine Wägezelle (14) zur Ermittlung der im Membranspeicher (7) befindlichen Kältemittelmenge vorgesehen ist.

3. Vorrichtung nach einem der Ansprüche 1 oder 2, **dadurch gekennzeichnet, dass** durch Schaltkombinationen der Sperrventile (101-113) weiters eine Konditionier-Fluidverbindung (D) von der Druckseite (7a) des Membranspeichers (7) zur ersten Kupplung (10) freigebbar ist.

4. Vorrichtung nach einem der Ansprüche 1 bis 3, **dadurch gekennzeichnet, dass** eine zweite Kupplung (11) zum Anschließen der Vorrichtung an einen zweiten Serviceanschluss der Klimaanlage vorgesehen ist, und dass durch Schaltkombinationen der Sperrventile (101-113) eine Ablass-Fluidverbindung (E, E', E") von der zweiten Kupplung (11), gegebenenfalls über eine Vakuumpumpe (12), zu einem Auslass (15, 15', 15") freigebbar ist.

5. Vorrichtung nach Anspruch 4, **dadurch gekennzeichnet, dass** durch Schaltkombinationen der Sperrventile (101-113) eine Kreislauf-Fluidverbindung (F) von der zweiten Kupplung (11), über einen Verdampfer (2), den Kompressor (4), und das Drosselorgan (6) zu der ersten Kupplung 10 freigebbar ist.

6. Vorrichtung nach einem der Ansprüche 1 bis 5, **dadurch gekennzeichnet, dass** die Quelle für flüssiges Kältemittel ein Steigrohr (3a) des zumindest einen Vorratsbehälters (3) und die Quelle für das gasförmige Kältemittel der Kopfanschluss (3b) des zumindest einen Vorratsbehälters (3) ist.

7. Verfahren zum Warten einer Klimaanlage mittels einer Vorrichtung gemäß einem der Ansprüche 1 bis 6 **dadurch gekennzeichnet, dass** das Verfahren beim Auffüllen der zuvor evakuierten Klimaanlage mit Kältemittel, vorzugsweise CO₂ bzw. R744,die folgenden Schritte aufweist:
- Schaffen eines Ausgangsdrucks im Membranspeicher, wobei der Ausgangsdruck über dem Sublimationsdruck des Kältemittels liegt;
- Einströmen lassen von flüssigem Kältemittel aus dem Vorratsbehälters in die Speicherseite des Membranspeichers;
- Erhöhen des Drucks im Membranspeicher durch Einbringen von gasförmigem Kältemittel in die Druckseite des Membranspeichers; und
- Einströmen lassen von flüssigem Kältemittel aus der Speicherseite des Membranspeichers in die Klimaanlage.

8. Verfahren nach Anspruch 7, **dadurch gekennzeichnet, dass** das gasförmige Kältemittel von dem Kompressor aus dem Vorratsbehälter zur Druckseite des Membranspeichers gepumpt wird.

9. Verfahren nach einem der Ansprüche 7 oder 8, **dadurch gekennzeichnet, dass** vor dem Schritt des einströmen Lassens von flüssigem Kältemittel in die Klimaanlage gasförmiges Kältemittel aus der Druckseite des Membranspeichers in die Klimaanlage einströmen gelassen wird.

10. Verfahren nach einem der Ansprüche 7 bis 9, **dadurch gekennzeichnet, dass** beim Schritt des einströmen Lassens von flüssigem Kältemittel aus dem Vorratsbehälter in die Speicherseite des Membranspeichers die Menge des im Membranspeicher vorhandenen flüssigen Druckmittels mit einer Wägezelle ermittelt wird.

11. Verfahren nach einem der Ansprüche 7 bis 10, **dadurch gekennzeichnet, dass** beim Schritt des einströmen Lassens von flüssigem Kältemittel in die Klimaanlage die Menge des eingeströmten Kältemittels über eine Wägezelle überwacht wird.

## Claims

1. A device for maintenance of an air conditioner, in particular for air conditioners which use CO₂ or R744 as refrigerant, wherein the device has at least one first coupling (10) for connecting the device to a first service connection of the air conditioner, at least one storage tank (3) for the refrigerant and a multiplicity of shut-off valves (101-113) for selectively opening different fluid connections, and wherein the device has a diaphragm accumulator (7) with a pressure side (7a) and an accumulator side (7b) separated from the pressure side (7a) by the diaphragm (7c) of the diaphragm accumulator (7), wherein a top-up fluid connection (A) for liquid refrigerant from a source of liquid refrigerant to the accumulator side (7b) of the diaphragm accumulator (7), and a filling fluid connection (C) from the accumulator side (7b) of the diaphragm accumulator (7) to the first coupling (10), can be selectively opened by switching combinations of the shut-off valves (101-113), **characterized in that** the device has a compressor (4) and a pressurized fluid connection (B) from a source of gaseous refrigerant via the compressor (4) to the pressure side (7a) of the diaphragm accumulator (7) can be selectively opened.

2. The device according to claim 1, **characterized in that** a load cell (14) is provided for determining the quantity of refrigerant located in the diaphragm accumulator (7).

3. The device according to one of claims 1 or 2, **characterized in that** furthermore a conditioning fluid connection (D) from the pressure side (7a) of the diaphragm accumulator (7) to the first coupling (10) can be opened by switching combinations of the shut-off valves (101-113).

4. The device according to one of claims 1 to 3, **characterized in that** a second coupling (11) is provided for connecting the device to a second service connection of the air conditioner, and that an outlet fluid connection (E, E', E") from the second coupling (11), optionally via a vacuum pump (12), to an outlet (15, 15', 15") can be opened by switching combinations of the shut-off valve (101-113).

5. The device according to claim 4, **characterized in that** a circulating fluid connection (F) from the second coupling (11), via an evaporator (2), the compressor (4), and the throttle element (6) to the first coupling (10) can be opened by switching combinations of the shut-off valve (101-113).

6. The device according to one of claims 1 to 5, **characterized in that** the source for liquid refrigerant is a riser pipe (3a) from the at least one storage tank (3) and the source for the gaseous refrigerant is the head connection (3b) of the at least one storage tank (3).

7. A method for maintenance of an air conditioner by means of a device according to one of claims 1 to 6, **characterized in that** when topping up the previously evacuated air conditioner with refrigerant, preferably CO₂ or R744, the method comprises the following steps:
- generating an initial pressure in the diaphragm accumulator, wherein the initial pressure is above the sublimation pressure of the refrigerant;
- allowing liquid refrigerant from the storage tank to flow into the accumulator side of the diaphragm accumulator;
- increasing the pressure in the diaphragm accumulator by introducing gaseous refrigerant into the pressure side of the diaphragm accumulator; and
- allowing liquid refrigerant from the accumulator side of the diaphragm accumulator to flow into the air conditioner.

8. The method according to claim 7, **characterized in that** the gaseous refrigerant is pumped by the compressor from the storage tank to the pressure side of the diaphragm accumulator.

9. The method according to one of claims 7 or 8, **characterized in that**, before the step of allowing liquid refrigerant to flow into the air conditioner, gaseous refrigerant is allowed to flow from the pressure side of the diaphragm accumulator into the air conditioner.

10. Method according to any one of claims 7 to 9, **characterized in that**, during the step of allowing liquid refrigerant to flow from the storage tank into the accumulator side of the diaphragm accumulator, the quantity of liquid pressure medium present in the diaphragm accumulator is determined by a load cell.

11. Method according to any one of claims 7 to 10, **characterized in that**, during the step of allowing liquid refrigerant to flow into the air conditioner, the quantity of refrigerant which has flowed in is monitored by a load cell.

## Revendications

1. Dispositif d'entretien d'une installation de climatisation, en particulier pour des installations de climatisation qui utilisent comme réfrigérant du CO₂ ou du R744, dans lequel le dispositif présente au moins un premier couplage (10) pour raccorder le dispositif à un premier raccord de service de l'installation de climatisation, au moins un réservoir (3) pour le réfrigérant et une pluralité de vannes d'arrêt (101-113) pour la libération sélective de différentes liaisons fluidiques et dans lequel le dispositif présente un accumulateur à membrane (7) avec un côté de refoulement (7a) et un côté accumulateur (7b) séparé du côté de refoulement (7a) par la membrane (7c) de l'accumulateur à membrane (7), dans lequel, par des combinaisons de commutation des vannes d'arrêt (101-113), une liaison fluidique (A) pour faire le plein de réfrigérant liquide d'une source de réfrigérant liquide au côté accumulateur (7b) de l'accumulateur à membrane (7) et une liaison fluidique de remplissage (C) du côté accumulateur (7b) de l'accumulateur à membrane (7) au premier couplage (10) peuvent être libérées sélectivement, **caractérisé en ce que** le dispositif présente un compresseur (4) et une liaison fluidique de montée en pression (B) d'une source de réfrigérant gazeux au côté de refoulement (7a) de l'accumulateur à membrane (7) via le compresseur peut être libérée sélectivement.

2. Dispositif selon la revendication 1, **caractérisé en ce qu'**une cellule de pesage (14) est prévue pour déterminer la quantité de réfrigérant se trouvant dans l'accumulateur à membrane (7).

3. Dispositif selon l'une quelconque des revendications 1 ou 2, **caractérisé en ce que**, par des combinaisons de commutation des vannes d'arrêt (101-113), une liaison fluidique de conditionnement (D) peut en outre être libérée du côté de refoulement (7a) de l'accumulateur à membrane (7) au premier couplage (10).

4. Dispositif selon l'une quelconque des revendications 1 à 3, **caractérisé en ce qu'**il est prévu un second couplage (11) pour raccorder le dispositif à un second raccord de service de l'installation de climatisation et, par des combinaisons de commutation des vannes d'arrêts (101-113), un raccord fluidique de décharge (E, E', E") peut être libéré du second couplage (11) à une évacuation (15, 15', 15"), éventuellement via une pompe à vide (12).

5. Dispositif selon la revendication 4, **caractérisé en ce que**, par des combinaisons de commutation des vannes d'arrêt (101-113), une liaison fluidique en boucle (F) peut être libérée du second couplage (11) au premier couplage (10) via un évaporateur (2), le compresseur (4) et l'organe d'étranglement (6).

6. Dispositif selon l'une quelconque des revendications 1 à 5, **caractérisé en ce que** la source de réfrigérant liquide est un tube montant (3a) du au moins un réservoir (3) et la source de réfrigérant gazeux du raccord de tête (3b) du au moins un réservoir (3).

7. Procédé d'entretien d'une installation de climatisation au moyen d'un dispositif selon l'une quelconque des revendications 1 à 6, **caractérisé en ce que** le procédé présente lors du plein de l'installation de climatisation précédemment placée sous vide avec un réfrigérant, de préférence du CO₂ ou du R744, les étapes suivantes consistant à :
- fournir une pression de sortie dans l'accumulateur à membrane, dans lequel la pression de sortie se situe au-dessus de la pression de sublimation du réfrigérant ;
- faire couler du réfrigérant liquide du réservoir sur le côté accumulateur de l'accumulateur à membrane ;
- augmenter la pression dans l'accumulateur à membrane par introduction de réfrigérant gazeux dans le côté de refoulement de l'accumulateur à membrane ; et
- faire couler du réfrigérant liquide du côté accumulateur de l'accumulateur à membrane dans l'installation de climatisation.

8. Procédé selon la revendication 7, **caractérisé en ce que** le réfrigérant gazeux du compresseur est pompé du réservoir au côté de refoulement de l'accumulateur à membrane.

9. Procédé selon l'une quelconque des revendications 7 ou 8, **caractérisé en ce que**, avant l'étape visant à faire couler du réfrigérant liquide dans l'installation de climatisation, on fait couler du réfrigérant gazeux du côté de refoulement de l'accumulateur à membrane dans l'installation de climatisation.

10. Procédé selon l'une quelconque des revendications 7 à 9, **caractérisé en ce que**, à l'étape visant à faire couler du réfrigérant liquide du réservoir dans le côté accumulateur de l'accumulateur à membrane, on détermine la quantité de l'agent de refoulement liquide disponible dans l'accumulateur à membrane avec une cellule de pesage.

11. Procédé selon l'une quelconque des revendications 7 à 10, **caractérisé en ce que**, à l'étape visant à faire couler du réfrigérant liquide dans l'installation de climatisation, on contrôle la quantité du réfrigérant acheminé via une cellule de pesage.
